# EUROPÄISCHE PATENTANMELDUNG

(11) **EP 2 357 135 A2**
(43) Veröffentlichungstag der Anmeldung: **17.08.2011**
(21) Anmeldenummer: 11001030.3
(22) Anmeldetag: 09.02.2011
(51) Int. Cl.: B64G 1/14, B64G 1/22, B64G 1/56

(54) **Vorrichtung zum Eliminieren von Weltraumschrott im Orbit**

(30) Priorität: 17.02.2010 DE 102010008376
(71) Anmelder: Astrium GmbH, 82024 Taufkirchen (DE)
(72) Erfinder: Knirsch, Ulrich, 88677 Markdorf (DE); Temming, Amrei, 76137 Karlsruhe (DE)
(74) Vertreter: Avenhaus, Beate

(57) **Zusammenfassung**

Die Erfindung beschreibt eine Vorrichtung (100) zum Eliminieren von Weltraumschrott im Orbit, umfassend eine Hülle (1), welche beim Aufprall eines Weltraumschrottteils (10) bis zu einer vorgegebenen Größe dieses in mehrere Teilstücke (10a, ..., 10e) zerbricht und zumindest manche der Teilstücke (10a, ..., 10e) auffängt und bindet. Die Hülle (1) umfasst zumindest eine Lage (2, 3) verformbaren Gewebes, die ein Raumvolumen (4) der Vorrichtung (100) umschließt, wobei zur Formhaltung der zumindest einen Lage (2, 3) ein Schaumstoff (6) angeordnet ist, dessen Ausgangsvolumen in ein im Vergleich zu dem Ausgangsvolumen größeres Endvolumen veränderbar ist, wobei dann, wenn der Schaumstoff (6) sein Endvolumen aufweist, die Vorrichtung (100) ihre vorgegebene Gestalt und Funktion aufweist.

## Beschreibung

Die Erfindung betrifft eine Vorrichtung zum Eliminieren von Weltraumschrott im Orbit, umfassend eine Hülle, welche beim Aufprall eines Weltraumschrottteils bis zu einer vorgegebenen Größe dieses in mehrere Teilstücke zerbricht, und zumindest manche der Teilstücke auffängt und bindet.

Durch die anhaltende und zunehmende Nutzung des Weltraums entstandener Schrott gefährdet Satelliten und bemannte Raumfahrt-Missionen. Die größte Gefahr bezüglich Beschädigung oder Zerstörung der Satelliten oder Raumfahrzeuge geht dabei von kleinen Weltraumschrottteilen aus, die in der Größenordnung von 1 cm und weniger liegen und zahlenmäßig den überwiegenden Anteil an Weltraumschrottteilen ausmachen.

Zum Schutz von Satelliten und/oder Raumschiffen ist es bekannt, auf deren Außenseiten einen sog. "Whippie Shield" aufzubringen, der gegen den Aufschlag von kleinen Weltraumschrottteilen schützt. Der "Whipple Shield" besteht im Allgemeinen aus zwei metallischen Schichten, die voneinander durch einen Zwischenraum getrennt sind. Beim Aufprall auf die erste, äußere Schicht, die auch als "Bumper" bezeichnet wird, zerbricht das Weltraumschrottteil in mehrere Teilstücke. Das Weltraumschrottteil durchschlägt beim Aufprall die erste Schicht. Dabei fragmentiert das Weltraumschrottteil und Teilstücke entstehen. Die Teilstücke formen dabei einen Kegel aus. Durch die in einem Abstand zur ersten Schicht angeordnete zweite, innere Schicht und der Ausformung der Teilstücke als Kegel verringert sich die Dichte der Teilstücke bis zum Aufprall auf die zweite Schicht. Dies ermöglicht es der zweiten Schicht, die Teilstücke vollständig aufzufangen.

Die Effizienz eines "Whipple Shields" wird in erster Linie durch das Quadrat des Abstands zwischen der ersten und zweiten Schicht bestimmt. Je größer der Abstand gemacht wird, desto geringer wird allerdings das zugleich nutzbare Volumen der Nutzlast. Hierdurch bedingt kann der Abstand oftmals nicht so bemessen werden, wie dies für eine effektive Funktion des "Whipple Shields" notwendig wäre. Ein weiterer Nachteil besteht darin, dass "Whipple Shields" verhältnismäßig schwer sind, was die Anwendung auf lediglich sicherheitskritische Weltraumkomponenten beschränkt. Solche sicherheitskritischen Weltraumkomponenten sind beispielsweise bemannte Weltraumstationen.

Da die Beschädigung oder sogar Zerstörung eines Satelliten oder eines Raumschiffes durch Weltraumschrottteile mit großen wirtschaftlichen Verlusten verbunden sein kann, besteht die Notwendigkeit, eine effektivere Lösung bereitzustellen, mit der die von Weltraumschrottteilen ausgehende Gefahr verringert werden kann.

Es ist daher Aufgabe der vorliegenden Erfindung, eine Vorrichtung anzugeben, mit der auf einfache und kostengünstige Weise eine Eliminierung von Weltraumschrott im Orbit bereitgestellt wird.

Diese Aufgabe wird gelöst durch eine Vorrichtung gemäß den Merkmalen des Patentanspruchs 1. Vorteilhafte Ausgestaltungen ergeben sich aus den abhängigen Patentansprüchen.

Die Erfindung schafft eine Vorrichtung zum Eliminieren von Weltraumschrott im Orbit, umfassend eine Hülle, welche beim Aufprall eines Weltraumschrottteils bis zu einer vorgegebenen Größe dieses in mehrere Teilstücke zerbricht und zumindest manche der Teilstücke auffängt und bindet. Erfindungsgemäß umfasst die Hülle zumindest eine Lage verformbaren Gewebes, die ein Raumvolumen der Vorrichtung umschließt, wobei zur Formhaltung innerhalb der zumindest einen Lage ein Schaumstoff angeordnet ist, dessen Ausgangsvolumen in ein im Vergleich zu dem Ausgangsvolumen größeres Endvolumen veränderbar ist, wobei dann, wenn der Schaumstoff sein Endvolumen aufweist, die Vorrichtung ihre vorgegebene Gestalt und Funktion aufweist.

Die erfindungsgemäße Vorrichtung kann autark eingesetzt werden, um Satelliten und/oder Raumfahrzeuge gefährdende Weltraumschrottteile zu eliminieren. Beim Aufprall eines Weltraumschrottteiles bis zu einer vorgegebenen Größe dringt dieses ins Innere der Vorrichtung vor, zerbricht jedoch dabei in mehrere Teilstücke. Diese werden beim Aufprall auf die Innenseite der Hülle aufgefangen. Mit der erfindungsgemäßen Vorrichtung ist eine präventive Elimination von Weltraumschrottteilen möglich, da keine Kopplung zu einem zu schützenden Satelliten oder zu schützendem Weltraumschiff erfolgen muss. Damit können durch eine erfindungsgemäße Vorrichtung vor dem Zusammenprall mit anderen Komponenten Weltraumschrottteile abgefangen werden.

Dadurch, dass die Vorrichtung eine masseminimale Kombination von Geweben sowohl zum Aufbrechen der Weltraumschrottteile als auch zum Auffangen der Teilstücke verwendet und weiterhin die Form durch einen leichten Schaumstoff hergestellt ist, weist die erfindungsgemäße Vorrichtung trotz großer realisierbarer Querschnittsfläche eine geringe Masse auf. Dadurch, dass die vorgegebene Gestalt und Funktion der Vorrichtung erst am Einsatzort, d.h. im Orbit, bereitgestellt wird, weist die erfindungsgemäße Vorrichtung darüber hinaus ein geringes Startvolumen auf. Im Ergebnis lassen sich Weltraumschrottteile mit geringen Kosten eliminieren. Die Verwendung von Geweben für die Umhüllung sowie eines Schaumstoffs zur Bereitstellung des Abstands zwischen den beiden Schichten der Umhüllung ermöglicht eine nahezu freie Formbarkeit sowie Skalierbarkeit der Vorrichtung. Hierdurch kann vorhandene zusätzliche Startmasse eines Trägersystems ideal ausgenützt werden (sog. "Piggyback"-Missionen).

Obwohl die erfindungsgemäße Vorrichtung primär zum autarken Einsatz zur Elimination von Weltraumschrott ausgebildet ist, kann diese auch zum Schutz konkreter Weltraumkomponenten bei gleichzeitigem Reinigungseffekt eingesetzt werden, indem eine mechanische Kopplung der Vorrichtung mit der zu schützenden Weltraumkomponente erfolgt.

In einer konkreten Ausgestaltung umschließt die zumindest eine Lage verformbaren Gewebes einen Schaumstoffkern. Dieser Schaumstoffkern dient primär zur Formgebung, hat jedoch auch eine gewisse Brems- und Schutzwirkung. Dabei kann der Schaumstoffkern füllend oder auch hohl ausgebildet sein.

Insbesondere ist der Schaumstoff in seinem Ausgangsvolumen in etwa auf einen Bruchteil, insbesondere in etwa ein Zehntel seines Endvolumens, komprimiert. Um ein geringes Gewicht und eine hohe Ausdehnung vom Ausgangsvolumen zum größeren Endvolumen zu erzielen, ist ferner vorgesehen, dass der Schaumstoff vorzugsweise offenporig ausgebildet ist.

Alternativ ist der Schaumstoff aus mehreren Komponenten im Betrieb der Vorrichtung im Weltall erzeugbar. Dies kann beispielsweise durch das gezielte Mischen von in dem Raumvolumen angeordneten Substanzen geschehen. Beispielsweise können hierbei Monomere zum Einsatz kommen.

Es ist bevorzugt, wenn die Hülle eine erste, äußere Lage aus einem Gewebe mit hoher innerer Schallgeschwindigkeit (z.B. Nextel-Gewebe) umfasst, um die Fragmentierung eines Weltraumschrottteilchens zu erzielen. Vorzugsweise ist eine zweite, innere Lage der Hülle aus einem zähen Gewebe (z.B. Kevlar-Gewebe) gebildet, um Fragmentierungsteilchen aufzufangen. Die beiden Gewebe weisen die eingangs erwähnten Eigenschaften auf: Das Nextel-Gewebe, das als erste, äußere Lage eingesetzt wird, zerbricht beim Aufprall eines Weltraumschrottteils bis zu einer vorgegebenen Größe dieses in die mehreren Teilstücke. Das Kevlar-Gewebe, welches die zweite, innere Lage der Vorrichtung ausbildet, fängt die durch die Hülle und den Schaumstoff hindurch tretenden Teile im Inneren der Vorrichtung auf und bindet diese. Sollte ein Weltraumschrottteil die vorgegebene Größe überschreiten, so kann dieses die Vorrichtung zwar vollständig durchdringen. Dadurch, dass ein Schaumstoff im Inneren der Umhüllung angeordnet ist, weist die Vorrichtung eine Eigenstabilität auf, so dass die bestimmungsgemäße Schutzfunktion weiter erfüllt werden kann.

Gemäß einer weiteren Ausgestaltung ist der Schaumstoff zur Einnahme seines Ausgangsvolumens über Haltemittel komprimiert. Als Haltemittel können beispielsweise Leinen oder ein Netz verwendet werden. Zweckmäßigerweise sind die Haltemittel lösbar oder zerstörbar ausgebildet, um eine Veränderung des Ursprungsvolumens des Schaumstoffs, und optional des weiteren Schaumstoffs, in das Endvolumen zu ermöglichen. Die Haltemittel können in einer Variante im Inneren des Raumvolumens der Vorrichtung angeordnet sein und nach Aussetzen der Vorrichtung im Weltall durchtrennt werden. Alternativ können die Haltemittel auf der im Betrieb der Vorrichtung dem Weltall zugewandten Außenseite der Hülle angeordnet sein. Hierbei kommen entweder Leinen oder ein Netz in Betracht. Die Haltemittel werden nach dem Aussetzen der Vorrichtung im Weltall von außerhalb der Vorrichtung durchtrennt, so dass die Vorrichtung ihre vorgegebene Gestalt und damit Funktion annehmen kann. Das Annehmen der vorgegebenen Gestalt der Vorrichtung kann beispielsweise durch den im Inneren der Hülle angeordneten Schaumstoff, der sich beim Wegfall der Haltemittel ausdehnt oder aktiv zum Ausdehnen gebracht wird, hergestellt werden.

Gemäß einer weiteren Ausgestaltung ist das Raumvolumen zur mechanischen Stabilisierung der Umhüllung zumindest teilweise mit Material gefüllt. Primär hat das Material in dem Raumvolumen die Aufgabe einer mechanischen Stabilisierung der Vorrichtung, z.B. dann, wenn die Umhüllung von einem Weltraumschrottteil durchdrungen wurde. Das Material kann beispielsweise der vorgesehene Schaumstoff sein. Gegebenenfalls kann durch das Material eine Selbstheilung der Umhüllung bei einem Durchschlag der Vorrichtung bereitgestellt werden. Das Material kann beispielsweise ein selbsthärtendes Polymer umfassen. Dieses weist die Eigenschaft einer harten und dünnen Struktur auf, wodurch Formstabilität im Falle einer Beschädigung sichergestellt wird. Alternativ ist das Material aus zumindest zwei miteinander vermischbaren, im Ursprungszustand flüssigen, Monomeren gebildet, die beim Vermischen eine Matrix ausbilden und dabei ein Gas absondern. Die Herstellung der Stabilität und Form der Vorrichtung erfolgt dabei aus dem Inneren heraus, d.h. dem von der zumindest einen Lage umgebenen Raumvolumen. Das Material sorgt dafür, dass die Gestalt der Vorrichtung auch bei einer Beschädigung durch ein (z.B. zu großes) Weltraumschrottteil aufrecht erhalten werden kann.

Es hat sich als zweckmäßig herausgestellt, wenn die Vorrichtung rotationssymmetrisch bezüglich mindestens einer Rotationsachse ist, wenn der Schaumstoff der Umhüllung sein Endvolumen aufweist. Es ist insbesondere zweckmäßig, wenn die Vorrichtung eine kugelförmige Gestalt aufweist, da diese Raumform eine große Oberfläche im Verhältnis zu ihrem Volumen aufweist und hierdurch mit hoher Effizienz Weltraumschrottteile "beseitigen" kann. Ebenso kann die Vorrichtung eine zylindrische Gestalt aufweisen, durch die ein ähnliches Oberflächen-Raumverhältnis im Vergleich zu einer Kugel bereitgestellt ist.

Es ist weiterhin zweckmäßig, wenn der Durchmesser der Vorrichtung mindestens 50cm beträgt. Vorzugsweise beträgt der Durchmesser der bevorzugt kugelförmigen oder zylindrischen Vorrichtung in etwa 1 m. Hierdurch kann einerseits ein ausreichend großer Abstand zwischen dem ersten und zweiten Aufprall an der Hülle bereitgestellt werden, wodurch eine hohe Abfangleistung der Vorrichtung sichergestellt ist. Andererseits weist die Vorrichtung dann eine Größe auf, welche sich im komprimierten Zustand auf einfache Weise ins Weltall transportieren lässt und im Endzustand eine ausreichende Größe zum Abfangen von Weltraumschrottteilen aufweist. Als ausreichend hat es sich hierbei herausgestellt, wenn die Wanddicke des Schaumstoffkerns in etwa 10 cm beträgt.

Die Erfindung wird nachfolgend näher anhand der Figuren erläutert. Es zeigen:
Fig. 1 ein erstes Ausführungsbeispiel einer erfindungsgemäßen Vorrichtung zur Eliminierung von Weltraumschrott im Orbit, und
Fig. 2 ein zweites Ausführungsbeispiel einer erfindungsgemäßen Vorrichtung zur Eliminierung von Weltraumschrott im Orbit.

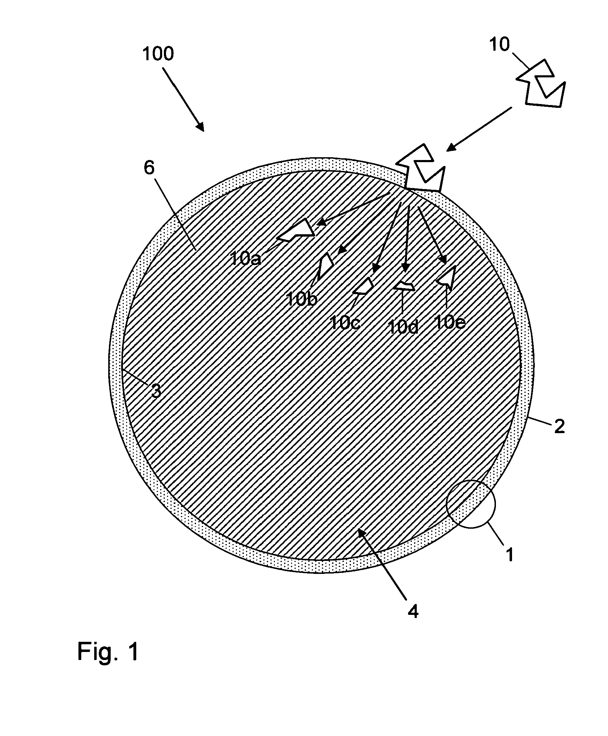

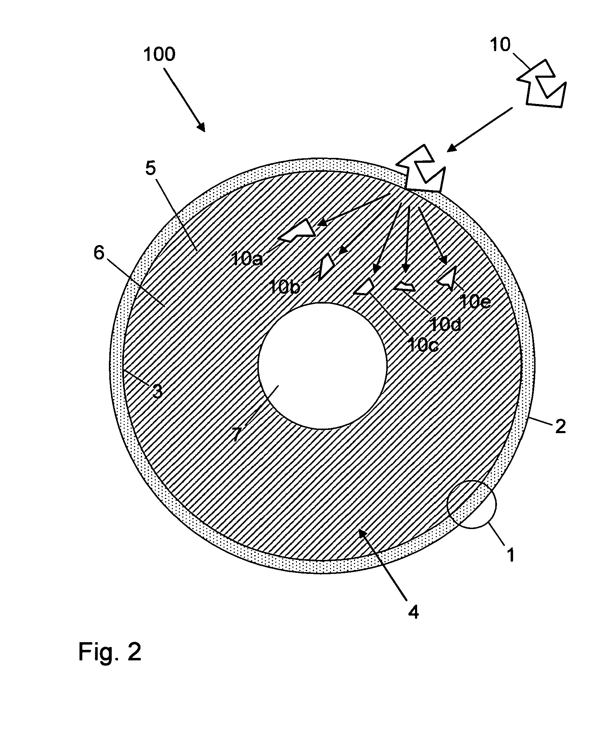

Die Figuren 1 und 2 zeigen Ausführungsbeispiele einer erfindungsgemäßen Vorrichtung 100 zum Eliminieren von Weltraumschrott im Orbit. Insbesondere können durch die erfindungsgemäße Vorrichtung 1 Weltraumschrottteile im Sub-Zentimeterbereich aufgefangen und gebunden werden.

Jede der Vorrichtungen 100 umfasst eine Hülle 1 mit einer ersten, äußeren Lage bzw. Schicht 2, z.B. aus einem Nextel-Gewebe, und einer zweiten, inneren Lage bzw. Schicht 3, z.B. aus einem Kevlar-Gewebe. Die Hülle 1 kann als Doppellage oder -schicht ausgebildet sein. Die Materialeigenschaften der aus Gewebe bestehenden ersten und zweiten Schicht 2, 3 sind derart gewählt, dass beim Aufprall eines Weltraumschrottteils 10 auf die erste, äußere Schicht 2 das Weltraumschrottteil 10 in mehrere Teilstücke 10a, ..., 10e zerbricht. Die zweite, innere Schicht 3 fängt Teilstücke 10a, ..., 10e des Weltraumschrottteils 10 im Inneren der Umhüllung 1 möglichst vollständig auf und bindet diese.

Die erste und die zweite Schicht 2, 3 bilden die Umhüllung 1 der Vorrichtung 100, welche ein Raumvolumen 4 der Vorrichtung 100 umschließt. In der Hülle oder Umhüllung 1 ist ein Schaumstoff 6, vorzugsweise ein offenporiger Schaumstoff, angeordnet. Das Raumvolumen 4 ist vorzugsweise zumindest teilweise mit dem Schaumstoff 6 gefüllt, dessen Funktion nachfolgend näher beschrieben wird. Die Figuren 1 und 2 zeigen die Vorrichtung 100 in einem Zustand, in dem der Schaumstoff 6 sein Endvolumen aufweist, so dass die vorgegebene, im Ausführungsbeispiel kugelförmige Gestalt der Vorrichtung 100 gegeben ist. Da die Schutzfunktion der Umhüllung 1 vom Abstand des ersten und zweiten Aufpralles, muss der Durchmesser prinzipiell möglichst groß gestaltet werden. Ein Durchmesser von mindestens ca. 50 cm wird als geeignet zum Auffangen und Binden von Weltraumschrottteilen im Sub-Zentimeterbereich erachtet.

Aufgrund der gewählten Materialien der Umhüllung 1 lässt sich die erfindungsgemäße Vorrichtung 100 auf einfache Weise verkleinern, so dass diese einfach und kostengünstig ins Weltall transportiert werden kann. Schaumstoff, insbesondere offenporiger Schaumstoff, lässt sich einfach auf ein Zehntel seines Endvolumens komprimieren. Schaumstoff kann in nahezu jeder Gestalt hergestellt werden, wobei dieser bei der vorliegenden Erfindung mit den Gewebeschichten 2, 3 aus Kevlar und auf Nextel bedeckt wird. Die Hauptfunktion des Schaumstoffs besteht darin, die Gestalt der Vorrichtung auch nach erfolgtem Aufprall von Weltraumschrott sicherzustellen. Aufgrund seines geringen Gewichts und seiner technischen Eigenschaften trägt er zudem dazu bei, Teilstücke des an der ersten Schicht zerbrochenen Weltraumschrottteils aufzufangen und zu binden.

Da die Richtung des Aufpralls eines Weltraumschrottteils auf die Vorrichtung 100 nicht vorhergesagt werden kann, wird die Vorrichtung 100 bezüglich zumindest einer Achse symmetrisch ausgebildet. Insbesondere bieten sich kugelförmige oder zylinderförmige Ausgestaltungen an.

Anhand geometrischer Analysen kann gezeigt werden, dass bei umso kleinerem Durchmesser der Vorrichtung das Verhältnis zwischen der Oberfläche und der Masse größer wird. Dieses Verhältnis stellt einen Gradmesser für die Effizienz der Vorrichtung 100 dar. Andererseits reduzieren geringe Durchmesser den Abstand zwischen der ersten Umhüllung 1 und setzen damit die Schutzwirkung herab. Da die erfindungsgemäße Vorrichtung 100 passiv ist, d.h. über keinerlei eigenständigen Antrieb verfügt, stellt die Vorrichtung 100 selbst ein gewisses Kollisionsrisiko für im Orbit befindliche Raumfahrzeuge und/oder Satelliten dar. Da mit zunehmend verringertem Durchmesser die Vorrichtung 100 auch schwerer durch die Satelliten und/oder Raumfahrzeuge detektiert werden könnte, wird für die Vorrichtung 100 mit kugelförmiger oder zylindrischer Gestalt ein Durchmesser von 50 cm bis 1 m vorgeschlagen. Hierdurch wird ein guter Kompromiss zwischen Erkennbarkeit und Gefährdungspotential erreicht.

Wird die Vorrichtung 100 in Gestalt eines Zylinders ausgebildet, so weist diese vorzugsweise eine maximale Länge von 4 m und einen Durchmesser von 1 m auf. Das Verhältnis einer Querschnittsfläche zum Volumen (A/V) und das Verhältnis der Querschnittsfläche zur Masse (A/m) sind bei einer zylinderförmigen Vorrichtung nahezu identisch zu den entsprechenden Werten einer kugelförmigen Vorrichtung. Allerdings weist eine kugelförmige Vorrichtung den Vorteil auf, dass sie eine größere Querschnittsfläche für einzufangende Weltraumschrottteile auf exzentrischen Orbits aufweist. Hierdurch ergibt sich eine verbesserte "Reinigungswirkung" gegenüber zylinderförmigen Vorrichtungen. Kugelförmige Vorrichtungen weisen darüber hinaus den Vorteil auf, dass es einfacher ist, eine Anzahl an komprimierten Kugeln als sekundäre Nutzlast in den Orbit zu transportieren. Eine zylinderförmige Vorrichtung dagegen würde ihre Länge beibehalten, wenn diese in radialer Richtung komprimiert wird. Dadurch ist es schwieriger, eine zylinderförmige Vorrichtung als Nutzlast mitzuführen.

Für den Transport der Vorrichtung können mechanische Haltemittel vorgesehen sein, welche den Schaumstoff 6 zur Einnahme seines Ausgangsvolumens komprimieren. Beispielsweise könnten radial angebrachte Leinen oder Seile im Inneren der Vorrichtung 100, d.h. im Raumvolumen 4, vorgesehen sein, welche nach dem Aussetzen der Vorrichtung 100 im Weltall aufgetrennt werden, so dass der Schaumstoff sein Endvolumen annehmen kann. Alternativ könnten um die Außenseite der Umhüllung Leinen oder Seile gewickelt sein, welche nach dem Aussetzen im Weltall durchtrennt werden könnten. Ebenso denkbar ist ein Netz oder Folienhülle, das eine Mehrzahl an Vorrichtungen 100 in komprimierter Form enthält, wobei das Netz beim Aussetzen der Vorrichtungen 100 geöffnet oder durchtrennt würde.

Zur Bereitstellung der Schutzwirkung der Vorrichtung 100 ist prinzipiell lediglich das Vorsehen der Umhüllung 1 notwendig. Aus diesem Grund ist es ausreichend, wenn die Struktur, d.h. die Gestalt der Vorrichtung, erst im Orbit hergestellt wird - unabhängig von der Gestalt, welche die Vorrichtung 100 tatsächlich aufweisen soll. Um die Gestalt der Vorrichtung 100 auch dann aufrecht erhalten zu können, wenn die Umhüllung aufgrund auftreffender Weltraumschrottteile durchdrungen und/oder beschädigt wird, kann vorgesehen sein, den Innenraum (Raumvolumen 4) kontinuierlich mit dem Schaumstoff aufzufüllen (Fig. 1) oder eine selbstheilende Komponente in der Vorrichtung 100 vorzusehen. Das Raumvolumen der Vorrichtung 100 kann z.B. mit einem selbstaushärtenden Material, beispielsweise einem Schaumstoff, ausgefüllt werden.

Im Ausführungsbeispiel der Fig. 1 füllt der Schaumstoff 6 das Raumvolumen 4 vollständig aus, während im Ausführungsbeispiel der Fig. 2 lediglich ein Teil des Raumvolumens 4 ausgefüllt ist und somit ein Schaumstoffkern 5 vorgesehen ist. Im Zentrum der kugelförmigen Vorrichtung 100 befindet sich ein vom Schaumstoff 6 freigesparter Bereich 7.

Der Schaumstoff 6 kann aus zumindest zwei miteinander vermischbaren, im Ursprungszustand vorzugsweise flüssigen, Monomeren gebildet sein. Beim Vermischen zweier Monomere bildet sich eine Matrix. Darüber hinaus entsteht ein Gas, welches die Matrix in Schaumstoff übergehen lässt. Dabei ist es möglich, mit einem geringen Volumenanteil an flüssigen Komponenten das hundertfache Volumen an Schaumstoff zu erstellen. Es sind Monomere bekannt, die bei den im Weltall herrschenden Temperaturen die beschriebene Funktion bereitstellen können.

Die erfindungsgemäße Vorrichtung 100 verwendet zur Elimination von Weltraumschrottteilen eine masseminimale Kombination von Geweben, sowohl zum Aufbrechen der Weltraumschrottteile als auch zum Auffangen der zerbrochenen Teilstücke. Der Abstand zwischen dem ersten und zweiten Auftreffen auf die Hülle wird durch einen aus Kunststoff gebildeten Schaumstoff bereitgestellt. Hierdurch kann der Abstand zwischen den beiden Schichten gegenüber herkömmlichen Vorrichtungen zur Potenzierung der Abfangleistung auf einfache Weise vergrößert werden, da zum Zwecke des Transports eine Komprimierung möglich ist.

Der Schaumstoff selbst erhöht die Abfangleistung weiter und wirkt gleichzeitig dem Aufwurf von Teilstücken entgegen. Weltraumschrottteile, die eine auslegungsgemäße Größe überschreiten, werden durch die Vorrichtung 100 dennoch zertrümmert, wobei zertrümmerte Teilstücke mit verminderter Geschwindigkeit austreten. Damit stellen diese auch ein reduziertes Gefährdungspotential dar.

Die erfindungsgemäße Vorrichtung 100 kann präventiv und autark, d.h. unabhängig von einem Satelliten oder einem Raumfahrzeug, eingesetzt werden.

Aufgrund der verwendeten Materialien lassen sich erfindungsgemäße Vorrichtungen auf einfache und kostengünstige Weise ins Weltall transportieren. Insbesondere weisen diese bei geringer Masse, geringem Startvolumen und geringen Kosten eine hohe Abfangleistung auf.

Gemäß einer Ausführungsform lässt sich die Erfindung alternativ auch an schützenswerten Satelliten oder anderen Raumfahrzeugen (z. B. bemannten Raumfahrzeugen) anbringen. Diese sind dann masse- und raumeffizient geschützt. Gleichzeitig wäre eine gewisse Reinigungsfunktion ein positiver Nebeneffekt.

## Patentansprüche

1. Vorrichtung (100) zum Eliminieren von Weltraumschrott im Orbit, umfassend eine Hülle (1), welche beim Aufprall eines Weltraumschrottteils (10) bis zu einer vorgegebenen Größe dieses in mehrere Teilstücke (10a, ..., 10e) zerbricht und zumindest manche der Teilstücke (10a, ..., 10e) auffängt und bindet,
**dadurch gekennzeichnet, dass**
die Hülle (1) zumindest eine Lage (2, 3) verformbaren Gewebes umfasst, die ein Raumvolumen (4) der Vorrichtung (100) umschließt, wobei zur Formhaltung innerhalb der zumindest einen Lage (2, 3) ein Schaumstoff (6) angeordnet ist, dessen Ausgangsvolumen in ein im Vergleich zu dem Ausgangsvolumen größeres Endvolumen veränderbar ist, wobei dann, wenn der Schaumstoff (6) sein Endvolumen aufweist, die Vorrichtung (100) ihre vorgegebene Gestalt und Funktion aufweist.

2. Vorrichtung nach Anspruch 1, **dadurch gekennzeichnet, dass** die zumindest eine Lage (2, 3) verformbaren Gewebes einen Schaumstoffkern (5) umschließt.

3. Vorrichtung nach einem der Ansprüche 1 bis 2, **dadurch gekennzeichnet, dass** der Schaumstoff (6) in seinem Ursprungsvolumen in etwa auf einen Bruchteil, insbesondere in etwa ein Zehntel, seines Endvolumens komprimiert ist.

4. Vorrichtung nach einem der Ansprüche 1 bis 3, **dadurch gekennzeichnet, dass** der Schaumstoff (6) offenporig ist.

5. Vorrichtung nach einem der Ansprüche 1 bis 3, **dadurch gekennzeichnet, dass** der Schaumstoff (6) aus mehreren Komponenten im Betrieb der Vorrichtung im Weltall erzeugbar ist.

6. Vorrichtung nach einem der vorhergehenden Ansprüche, **dadurch gekennzeichnet, dass** die Hülle (1) eine erste äußere Lage (2) aus einem Gewebe mit hoher innerer Schallgeschwindigkeit, insbesondere Nextel-Gewebe, umfasst.

7. Vorrichtung nach einem der vorhergehenden Ansprüche, **dadurch gekennzeichnet, dass** die Hülle (1) eine zweite, innere Lage (3) aus einem zähen Gewebe, insbesondere einem Kevlar-Gewebe, umfasst.

8. Vorrichtung nach einem der vorhergehenden Ansprüche, **dadurch gekennzeichnet, dass** der Schaumstoff (6) zur Einnahme seines Ausgangsvolumens über Haltemittel komprimiert ist.

9. Vorrichtung nach Anspruch 8, **dadurch gekennzeichnet, dass** die Haltemittel im Inneren des Raumvolumens (4) der Vorrichtung (100) angeordnet sind.

10. Vorrichtung nach Anspruch 8, **dadurch gekennzeichnet, dass** die Haltemittel auf der im Betrieb der Vorrichtung dem Weltall zugewandten Außenseite der Hülle (1) angeordnet sind.

11. Vorrichtung nach einem der Ansprüche 8 bis 10, **dadurch gekennzeichnet, dass** die Haltemittel lösbar oder zerstörbar ausgebildet sind, um eine Veränderung des Ursprungsvolumens des Schaumstoffs in das Endvolumen zu ermöglichen.

12. Vorrichtung nach einem der vorhergehenden Ansprüche, **dadurch gekennzeichnet, dass** das Raumvolumen (4) zur mechanischen Stabilisierung der Umhüllung (1) zumindest teilweise mit dem Schaumstoff (6) gefüllt ist.

13. Vorrichtung nach Anspruch 12, **dadurch gekennzeichnet, dass** das Material (5) einen selbsthärtenden Polymer umfasst.

14. Vorrichtung nach Anspruch 12, **dadurch gekennzeichnet, dass** das Material (5) aus zumindest zwei miteinander vermischbaren, im Ursprungszustand flüssigen, Monomeren gebildet ist, die beim Vermischen eine Matrix ausbilden und dabei ein Gas absondern.

15. Vorrichtung nach einem der vorhergehenden Ansprüche, **dadurch gekennzeichnet, dass** die Vorrichtung rotationssymmetrisch bezüglich mindestens einer Rotationsachse ist, wenn der Schaumstoff (6) sein Endvolumen aufweist.

16. Vorrichtung nach einem der vorhergehenden Ansprüche, **dadurch gekennzeichnet, dass** der Durchmesser der Vorrichtung (100) mindestens 50 cm beträgt.

17. Vorrichtung nach einem der vorhergehenden Ansprüche, **dadurch gekennzeichnet, dass** eine Wandstärke des Schaumstoffkerns (5) zwischen 5 und 15 cm, bevorzugt in etwa 10 cm, beträgt.
